**Europäisches Patentamt**

**European Patent Office**

**Office européen des brevets**

(11) Veröffentlichungsnummer: **0 078 461**
**A2**

## EUROPÄISCHE PATENTANMELDUNG

(21) Anmeldenummer: **82109742.5**

(22) Anmeldetag: **22.10.82**

(51) Int. Cl.³: **G 03 B 27/58**

(30) Priorität: **02.11.81 DE 3143358**

(43) Veröffentlichungstag der Anmeldung: **11.05.83**
**Patentblatt 83/19**

(84) Benannte Vertragsstaaten: **AT BE CH DE FR GB IT LI NL SE**

(71) Anmelder: **BASF Aktiengesellschaft, Carl-Bosch-Strasse 38, D-6700 Ludwigshafen (DE)**

(72) Erfinder: **Eckle, Albrecht, Richard-Wagner-Strasse 42, D-6711 Beindersheim (DE)**
Erfinder: **Klinsmann, Uwe, Dr., Mollstrasse 39, D-6800 Mannheim (DE)**

(54) Kopierrahmen zum genauen, visuell-manuellen Einrichten und zum Halten eines plattenförmigen Werkstücks.

(57) Kopierrahmen zum genauen, visuell-manuellen Einrichten und zum Halten eines plattenförmigen auf einer oder beiden Seiten eine lichtempfindliche Schicht tragenden Werkstücks gegenüber einer oder zwei auf einer oder beiden Seiten des Werkstücks anzulegenden Vorlagen, bestehend aus Unterrahmen (1) und Bodenplatte (2) aus lichtdurchlässigem Material, hochklappbarem am Unterrahmen befestigten Oberrahmen (3) und Deckplatte (4) aus lichtdurchlässigem Material, Einrichtungen zur Bildung eines Unterdruckes zwischen den beiden Deckplatten, Haltevorrichtungen (9) für das Werkstück und mechanischen Führungs- und Justierorganen zur Einzelverschiebung und exaktem Einrichten der beiden Deckplatten, bei dem das lichtdurchlässige Material aus Glas besteht. Mittels dieses Kopierrahmens ist es möglich, daß Bezugspunkte, die sich auf drei verschiedenen Ebenen befinden, durch entsprechendes Nachjustieren untereinander exakt deckungsgleich zu liegen kommen.

EP 0 078 461 A2

0078461

O.Z. 0050/35535

Kopierrahmen zum genauen, visuell-manuellen Einrichten und zum Halten eines plattenförmigen Werkstücks

Die Erfindung bezieht sich auf einen Kopierrahmen zum genauen, visuell-manuellen Einrichten und zum Halten eines plattenförmigen auf einer oder beiden Seiten eine lichtempfindliche Schicht tragenden Werkstückes gegenüber einer oder zwei auf einer oder beiden Seiten des Werkstücks anzulegenden Vorlagen, bestehend aus Unterrahmen und Bodenplatte aus lichtdurchlässigem Material, hochklappbarem am Unterrahmen befestigten Oberrahmen und Deckplatte aus lichtdurchlässigem Material, Einrichtungen zur Bildung eines Unterdruckes zwischen den beiden Deckplatten, Haltevorrichtungen für das Werkstück und mechanische Führungs- und Justierorganen zur Einzelverschiebung und exaktem Einrichten der beiden Deckplatten.

Es ist bekannt zur Übertragung von Vorlagen auf lichtempfindliche Werkstücke, beispielsweise Leiterrohplatten, diese Werkstücke mit Vorlagen in Kopierrahmen in Berührung zu bringen und zu belichten. Die Paßgenauigkeit zwischen solchen Leiterrohplatten, die eine große Anzahl eingebrachte Bohrungen enthalten, in die die elektrischen/elektronischen Bauteile eingesetzt werden und den Vorlagen, die die Leiterzüge zur Stromführung zwischen den obigen Bauteilen enthalten, ist absolut sicherzustellen. Dazu bedient man sich heute handelsüblicher Kopierrahmen. Diese Kopierrahmen arbeiten nach zwei verschiedenen Prinzipien, die in der DE-OS 23 30 726 und der DE-AS 26 53 707 beschrieben sind. Der Kopierrahmen gemäß der DE-OS 23 30 726 arbeitet nach dem Prinzip, daß die Leiterrohplatte im Kopierrahmen fest fixiert ist und die beiden Rahmen mit Boden- und Deckplatte aus lichtdurchlässigem Material und den jeweils daran angeklebten Vorlagen einzeln verschieb- und justierbar sind. Der Kopierrahmen gemäß der DE-AS 26 53 707 arbeitet nach

Go/P

dem Prinzip, daß die beiden Vorlagen deckungsgleich - nach den Lötaugen auf beiden Vorlagen - zu einer Filmtasche zusammengefügt und in einen Registerrahmen eingesetzt werden, in die die Leiterrohplatte eingelegt wird, die dann zwischen den beiden Vorlagen verschieb- und justierbar ist.

Der Nachteil der handelsüblichen Kopierrahmen - wie auch aus den obengenannten Schriften zu entnehmen ist - besteht darin, daß für die Boden- und die Deckplatte - an denen die Vorlagen anliegen - als lichtdurchlässiges Material flexibles Folienmaterial verwendet wird. Einerseits wird das flexible Folienmaterial durch das durchdringende Licht beim Belichten erwärmt und es dehnt sich, andererseits wird das flexible Folienmaterial beim Evakuieren des Raumes zwischen der Boden- und der Deckplatte deformiert, so daß die Forderung, daß Bezugspunkte, die sich auf drei verschiedenen Ebenen befinden, untereinander exakt deckungsgleich zu liegen kommen, nicht garantiert ist, insbesondere bei einerseits zunehmender Leiterbahndichte auf andererseits größer werdenden Leiterrohplatten. Gleichzeitig werden die Restringbreiten der Lötaugen auf den Leiterrohplatten stetig kleiner.

Der Erfindung liegt daher die Aufgabe zugrunde, die oben geschilderten Nachteile auszuschließen, d.h. ein lichtdurchlässiges Material für die Boden- und die Deckplatte zu finden, das sich bei verschiedenartigen Beanspruchungen absolut nicht verändert.

Diese Aufgabe wurde erfindungsgemäß dadurch gelöst, daß das lichtdurchlässige Material aus Glas besteht. Es hat sich als vorteilhaft erwiesen, thermisch vorgespanntes Glas zu verwenden.

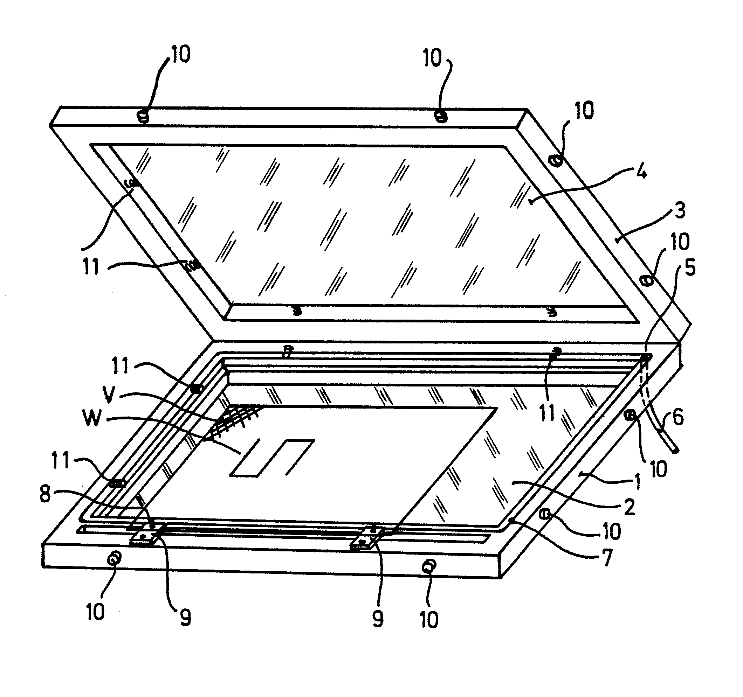

Ein Ausführungsbeispiel der Erfindung ist in der Zeichnung

0078461

dargestellt, und wird im folgenden näher beschrieben. Der Kopierrahmen besteht aus einem Unterrahmen 1, in den die Bodenplatte 2 aus Glas verschiebbar eingelegt ist und einem über Scharniere hochklappbaren Oberrahmen 3, in den die Deckplatte 4 aus Glas verschiebbar eingelegt ist. Über die Öffnung 5, den Schlauch 6 und eine gesonderte, handelsübliche Einrichtung zur Vakuumerzeugung wird der Raum zwischen der Boden- und Deckplatte - beide aus Glas - evakuiert. Zur Abdichtung von Ober- und Unterrahmen dient die am Unterrahmen eingelegte, umlaufende Dichtleiste 7. Die Haltestifte 8 auf den in x-Richtung verschiebbaren Haltevorrichtungen 9 dienen zum Festhalten des Werkstücks W. Das Einzelverschieben jeweils der Boden- und Deckplatte in x- und y-Richtung und das Justieren derselben erfolgt über die Mikrometerschrauben 10 und jeweils gegenüberliegenden Spiralfedern 11. Im folgenden wird die Arbeitsweise erläutert, wie Bezugspunkte, die sich auf drei verschiedenen Ebenen befinden, absolut deckungsgleich zu liegen kommen. Die beiden Vorlagen V werden über Klebestreifenfenster an dem Werkstück W fixiert. Anschließend werden die dem Werkstück abgewandten Seiten der Vorlagen mit Filmsprühkleber eingesprüht. Das Werkstück einschließlich der beiden Vorlagen wird mittels sogenannter Registrierbohrungen auf die Haltestifte gesteckt. Der Oberrahmen wird nun auf die Dichtleiste aufgelegt und der Raum zwischen den beiden Glasscheiben wird evakuiert, wobei die beiden Vorlagen auf die beiden Glasscheiben übertragen werden, wo sie durch den aufgesprühten Filmsprühkleber haften bleiben. Die Klebefolie zum Fixieren der Vorlagen wird nach Öffnen des Oberrahmens entfernt. Nun wird mittels der Mikrometerschrauben am Unterrahmen die auf der Bodenplatte aus Glas haftende Vorlage mit dem Werkstück deckungsgleich übereinander gebracht. Dasselbe geschieht anschließend zwischen Werkstück und der Deckplatte aus Glas mit der daran haftenden Vorlage.

0078461

Die mit der Erfindung erzielten Vorteile bestehen insbesondere darin, daß Bezugspunkte, die sich auf drei verschiedenen Ebenen befinden, durch entsprechendes Nachjustieren untereinander exakt deckungsgleich zu liegen kommen.

0078461

**Patentansprüche**

1. Kopierrahmen zum genauen, visuell-manuellen Einrichten und zum Halten eines plattenförmigen auf einer oder beiden Seiten eine lichtempfindliche Schicht tragenden Werkstücks gegenüber einer oder zwei auf einer oder beiden Seiten des Werkstücks anzulegenden Vorlagen, bestehend aus Unterrahmen und Bodenplatte aus lichtdurchlässigem Material, hochklappbarem am Unterrahmen befestigten Oberrahmen und Deckplatte aus lichtdurchlässigem Material, Einrichtungen zur Bildung eines Unterdruckes zwischen den beiden Deckplatten, Haltevorrichtungen für das Werkstück und mechanischen Führungs- und Justierorganen zur Einzelverschiebung und exaktem Einrichten der beiden Deckplatten, dadurch gekennzeichnet, daß das lichtdurchlässige Material aus Glas besteht.

2. Kopierrahmen gemäß Patentanspruch 1, dadurch gekennzeichnet, daß das Glas aus thermisch vorgespanntem Glas besteht.

Zeichn.